# EUROPÄISCHE PATENTSCHRIFT

(11) **EP 3 886 559 B1**
(45) Veröffentlichungstag und Bekanntmachung des Hinweises auf die Patenterteilung: **22.05.2024**
(21) Anmeldenummer: 19805229.2
(22) Anmeldetag: 14.11.2019
(51) Int. Cl.: A01C 17/00

(54) **VERFAHREN ZUM BESTIMMEN VON EINSTELLPARAMETERN FUER EINE LANDWIRTSCHAFTLICHE STREUMASCHINE**
METHOD OF DETERMINATION OF OPERATING PARAMETERS FOR AN AGRICULTURAL SPREADING MACHINE
PROCÉDÉ DE DÉTERMINATION DES PARAMÈTRES D'AJUSTAGE POUR UN ÉPANDEUR AGRICOLE

(30) Priorität: 26.11.2018 DE 102018129710
(43) Veröffentlichungstag der Anmeldung: 06.10.2021
(73) Patentinhaber: Amazonen-Werke H. Dreyer SE & Co. KG, 49205 Hasbergen (DE)
(72) Erfinder: RAHE, Florian, 49504 Lotte (DE); STRÖBEL-FRÖSCHLE, Markus, 49124 Georgsmarienhütte (DE)
(86) Internationale Anmeldenummer: PCT/EP2019/081267
(87) Internationale Veröffentlichungsnummer: WO 2020/109010

(56) Entgegenhaltungen:
- EP-A1- 2 944 174
- EP-A1- 3 017 678
- EP-A1- 3 087 817
- EP-A2- 2 924 417
- WO-A1-92/12620
- WO-A1-95/24823
- DE-A1-102016 108 176

## Beschreibung

Die Erfindung betrifft ein Verfahren zum Bestimmen von Einstellparametern für eine landwirtschaftliche Streumaschine nach dem Oberbegriff des Patentanspruchs 1.

Beim Ausbringen von Streugut auf einer landwirtschaftlichen Nutzfläche sind an der landwirtschaftlichen Streumaschine geeignete Einstellparameter einzustellen, damit während des Streuvorgangs das beabsichtigte Ausbringergebnis umgesetzt wird. Hierzu werden bisher Streutabellen eingesetzt, aus welchen der Landwirt geeignete Einstellparameter für einen geplanten Streuvorgang in Abhängigkeit der verwendeten Streumaschine, der auszubringenden Streugutsorte und der beabsichtigten Arbeitsbreite ablesen kann. Dieses Verfahren wird von den Landwirten zunehmend als aufwendig und vergleichsweise umständlich empfunden. Dies hängt insbesondere damit zusammen, dass der Landwirt zur Ermittlung geeigneter Einstellparameter über detaillierte Informationen zu dem geplanten Streuvorgang verfügen muss.

Aus der EP 3 087 817 A1, der WO 92/12620 A1, der WO 95/24823 A1, der EP 3 017 678 A1, der EP 2 924 417 A2 sowie der DE 10 2016 108176 A1 sind bereits mobile Verfahren zum Ermitteln von Eigenschaften von Streugutsorten bekannt. Über entsprechende mobile Verfahren ermittelte Eigenschaften von Streugutsorten werden jedoch bisher lediglich in eingeschränktem Umfang genutzt.

Die der Erfindung zugrundeliegende Aufgabe besteht somit darin, die Bestimmung von Einstellparametern für eine landwirtschaftliche Streumaschine zu vereinfachen.

Die Aufgabe wird gelöst durch ein Verfahren der eingangs genannten Art, wobei die Einstellparameter für eine landwirtschaftliche Streumaschine für einen geplanten Streuvorgang durch eine Auswerteeinrichtung auf Grundlage der Eigenschaften der Streugutsorte, welche mittels eines oder mehrerer mobiler Verfahren ermittelt wurden, und einer Angabe zu der beabsichtigten Arbeitsbreite bei dem geplanten Streuvorgang ermittelt werden.

Die Erfindung macht sich die Erkenntnis zunutze, dass durch die Anwendung eines oder mehrerer mobiler Verfahren zum Ermitteln von Eigenschaften einer Streugutsorte vermieden werden kann, dass der Landwirt die ermittelten Eigenschaften selbst zur Bestimmung geeigneter Einstellparameter bereitstellen muss. Somit sind bei dem Landwirt nicht zwingend detaillierte Kenntnisse zu dem geplanten Streuvorgang notwendig, da die notwendigen Angaben zu dem geplanten Streuvorgang auch mittels eines oder mehrerer mobiler Verfahren im Vorfeld des eigentlichen Streuvorgangs ermittelt werden können.

Die Auswerteeinrichtung kann beispielsweise Bestandteil eines maschinenexternen zentralen Computersystems, insbesondere eines Servers, sein. Das zentrale Computersystem kann beispielsweise von dem Hersteller der landwirtschaftlichen Streumaschine oder einem Drittanbieter betrieben werden. Ferner kann die Auswerteeinrichtung Bestandteil eines mobilen Endgeräts sein. Das mobile Endgerät kann auch zur Durchführung einzelner Schritte eines oder mehrerer mobiler Verfahren genutzt werden. Die Auswerteeinrichtung kann auch ein Bestandteil der landwirtschaftlichen Streumaschine sein.

Die Einstellparameter können eine einzustellende Drehzahl zumindest einer Verteilscheibe der landwirtschaftlichen Streumaschine und/oder einen einzustellenden Wert für den Aufgabepunkt des Streuguts auf die zumindest eine Verteilscheibe der landwirtschaftlichen Streumaschine betreffen. Die Einstellparameter können ferner die Wurfweite des Streuguts und/oder den Abwurfwinkel bzw. die Wurfrichtung des Streuguts betreffen. Die Einstellparameter können auch die Öffnungsgröße, die Öffnungsform und/oder die Öffnungsposition einer Streugut-Zuführöffnung der landwirtschaftlichen Streumaschine betreffen. Wenn zur Ausbringung des Streuguts eine Verteilscheibe mit einer oder mehreren Wurfschaufeln eingesetzt wird, können die Einstellparameter die Schaufelposition, die Schaufelneigung, die Schaufelausrichtung und/oder die Schaufellänge der einen oder der mehreren Wurfschaufeln der Verteilscheibe der landwirtschaftlichen Streumaschine betreffen. Wenn zur Ausbringung des Streuguts das Streugut über eine Zuführrutsche der landwirtschaftlichen Streumaschine geleitet wird, können die Einstellparameter die Rutschenneigung, die Rutschenausrichtung und/der die Rutschenposition betreffen. Darüber hinaus können die Einstellparameter die Verteilscheibe und/oder deren Geometrie und/oder deren Wurfschaufeltyp betreffen.

In einer bevorzugten Ausführungsform des erfindungsgemäßen Verfahrens sind die mittels des einen oder der mehreren mobilen Verfahren ermittelten Eigenschaften der Streugutsorte statische Streuguteigenschaften. Vorzugsweise betreffen diese statischen Streuguteigenschaften die Korngröße und/oder das Korngrößenspektrum und/oder die Schüttdichte der Streugutsorte. Alternativ oder zusätzlich können die statischen Streuguteigenschaften auch die mittlere Korngröße der Streugutsorte betreffen. Im Sinne der Erfindung sind unter statischen Streuguteigenschaften insbesondere die Eigenschaften der Streugutsorte zu verstehen, welche ohne eine Auswertung eines Bewegungsverhaltens der Streugutsorte ermittelbar sind. Dies sind insbesondere Eigenschaften, welche sich auf die Größe, das Gewicht und/oder die Dichte der Körner der Streugutsorte beziehen.

In einer anderen Ausführungsform des erfindungsgemäßen Verfahrens sind die mittels des einen oder der mehreren mobilen Verfahren ermittelten Eigenschaften der Streugutsorte dynamische Streuguteigenschaften. Vorzugsweise betreffen die dynamischen Streuguteigenschaften eine Wurfweite und/oder einen Abwurfwinkel der Streugutsorte. Alternativ oder zusätzlich zu der Ermittlung mittels eines oder mehrerer mobiler Verfahren kann der Abwurfwinkel auch aus der Korngröße und der Schüttdichte der Streugutsorte berechnet werden. Alternativ oder zusätzlich zu der Ermittlung mittels eines oder mehrerer mobiler Verfahren kann die Wurfweite auch aus der Korngröße, der Schüttdichte und dem Abwurfwinkel berechnet werden.

In einer vorteilhaften Weiterbildung des erfindungsgemäßen Verfahrens umfasst ein mobiles Verfahren zum Ermitteln der Eigenschaften der Streugutsorte das Erzeugen von Bilddaten, welche eine Darstellung von einem oder mehreren Körnern der Streugutsorte umfassen. Vorzugsweise umfasst dieses mobile Verfahren auch das Auswerten der erzeugten Bilddaten zum Ermitteln einer Korngröße oder der Anteile unterschiedlicher Korngrößen der dargestellten Streugutsorte. Das Ermitteln der Korngröße kann das Ermitteln einer mittleren Korngröße oder das Ermitteln eines Korngrößenspektrums umfassen. Auf Grundlage der ermittelten Korngröße oder der Anteile unterschiedlicher Korngrößen können weitere Eigenschaften der Streugutsorte von einer Datenbank abgerufen werden. Beispielsweise sind zu der ermittelten Korngröße oder den ermittelten Anteilen unterschiedlicher Korngrößen in der Datenbank Werte für die Schüttdichte der Streugutsorte und/oder eine Bezeichnung der Streugutsorte hinterlegt. Durch einen entsprechenden Abruf dieser Eigenschaften kann auf die Eingabe entsprechender Informationen durch den Landwirt verzichtet werden, sodass die Ermittlung geeigneter Einstellparameter für einen geplanten Streuvorgang erheblich vereinfacht wird.

In einer anderen Ausführungsform des erfindungsgemäßen Verfahrens umfasst ein mobiles Verfahren zum Ermitteln der Eigenschaften der Streugutsorte das Erzeugen von Bilddaten, welche eine Darstellung von einem oder mehreren Körnern der Streugutsorte umfassen, wobei die Bilddaten zur Identifikation der dargestellten Streugutsorte ausgewertet werden. Vorzugsweise werden im Rahmen des erfindungsgemäßen Verfahrens dann Eigenschaften der identifizierten Streugutsorte von einer Datenbank abgerufen. Die abgerufenen Eigenschaften können beispielsweise die Schüttdichte oder Korngrößeneigenschaften sein.

Außerdem ist ein erfindungsgemäßes Verfahren bevorzugt, bei welchem die Identifikation der Streugutsorte auf Grundlage der Auswertung der Bilddaten unter Verwendung eines künstlichen neuronalen Netzes erfolgt. Somit kann zur Identifikation der Streugutsorte künstliche Intelligenz eingesetzt werden. Insbesondere umfasst das Verfahren das Trainieren des künstlichen neuronalen Netzes anhand einer Vielzahl von unterschiedlichen Bilddaten. Insbesondere hat das künstliche neuronale Netz einen Zugang zu einer Datenbank, auf welcher eine Vielzahl von im Rahmen von mobilen Verfahren erzeugten Bilddaten, welche Streugut betreffen, hinterlegt sind. Auf diese Weise kann zum Trainieren des künstlichen neuronalen Netzes eine große Datenbasis genutzt werden.

In einer Weiterbildung des erfindungsgemäßen Verfahrens umfasst ein mobiles Verfahren zum Ermitteln der Eigenschaften der Streugutsorte das Ermitteln der Schüttdichte der Streugutsorte unter Verwendung eines Messgefäßes und/oder einer Gewichtserfassungseinrichtung. Das Messgefäß kann beispielsweise ein Messbecher sein. Die Gewichtserfassungseinrichtung kann beispielsweise eine Waage sein. Vorzugsweise umfasst das gleiche oder ein anderes mobiles Verfahren zur Ermittlung der Eigenschaften der Streugutsorte das Ermitteln der Anteile unterschiedlicher Korngrößen der Streugutsorte mittels eines Schüttelbehältnisses. Das Schüttelbehältnis umfasst vorzugsweise unterschiedliche Kammern, in welchen sich beim Schütteln des Schüttelbehältnisses jeweils Körner eines bestimmten Größenspektrums ansammeln. Insbesondere weist das Schüttelbehältnis ein transparentes oder teiltransparentes Außengehäuse auf, sodass die unterschiedlichen Kammern des Schüttelbehältnisses durch einen Benutzer von außen einsehbar sind.

In einer vorteilhaften Ausführungsform des erfindungsgemäßen Verfahrens umfasst ein mobiles Verfahren zum Ermitteln der Eigenschaften der Streugutsorte das Positionieren von einer oder mehreren Auffangeinrichtungen auf der landwirtschaftlichen Nutzfläche und/oder das Erzeugen von Bildmaterial, welches die Verteilung des von der einen oder den mehreren Auffangeinrichtungen während einer Prüfausbringung aufgefangenen Streuguts betrifft. Das Erzeugen des Bildmaterials erfolgt vorzugsweise unter Verwendung eines mobilen Endgeräts. Das Auswerten des erzeugten Bildmaterials erfolgt vorzugsweise durch die Auswerteeinrichtung oder durch eine Anwendung auf einem mobilen Endgerät. Das erzeugte Bildmaterial sind vorzugsweise Fotos der Auffangeinrichtungen. Die Auffangeinrichtungen sind vorzugsweise Matten, insbesondere Kunststoffmatten. Die Auffangeinrichtungen können an ihrer Oberseite jeweils eine Vielzahl von Fangelementen, wie etwa Noppen, Stäbchen oder Fasern, aufweisen.

In einer anderen Ausführungsform des erfindungsgemäßen Verfahrens umfasst ein mobiles Verfahren zum Ermitteln der Eigenschaften der Streugutsorte das Erfassen einer tatsächlichen Wurfweite der Streugutsorte mittels einer Wurfweitenmesseinrichtung der landwirtschaftlichen Streumaschine. Das Gleiche oder ein anderes mobiles Verfahren zum Ermitteln der Eigenschaften der Streugutsorte umfasst das Erfassen eines tatsächlichen Abwurfwinkels der Streugutsorte mittels einer Abwurfwinkelmesseinrichtung der landwirtschaftlichen Streumaschine. Die Wurfweitenmesseinrichtung und/oder die Abwurfwinkelmesseinrichtung können einen oder mehrere Sensoren und/oder eine oder mehrere Kameras umfassen, welche die Streufächer der landwirtschaftlichen Streumaschine überwachen. Die Sensoren können insbesondere Radarsensoren sein.

Darüber hinaus ist ein erfindungsgemäßes Verfahren vorteilhaft, bei welchem einem Benutzer eine Eingabemöglichkeit bereitgestellt wird, über welche die im Rahmen des geplanten Streuvorgangs auszubringende Streugutsorte definierbar ist. Alternativ oder zusätzlich kann die Streugutsorte auf Grundlage der im Rahmen des einen oder der mehreren mobilen Verfahren ermittelten Eigenschaften der Streugutsorte identifiziert werden. Die Eingabemöglichkeit für den Benutzer wird vorzugsweise auf einem mobilen Endgerät bereitgestellt, welches vorzugsweise auch zur Umsetzung eines oder mehrerer mobiler Verfahren eingesetzt wird. Die Eingabe zum Definieren der auszubringenden Streugutsorte kann eine alphanumerische Eingabe eines Kürzels, Codes oder der Streugutsortenbezeichnung sein. Die Eingabe kann alternativ auch eine Auswahl aus einer Liste einer Vielzahl von Streugutsorten sein. Das Identifizieren der Streugutsorte auf Grundlage der ermittelten Eigenschaften der Streugutsorte erfolgt vorzugsweise unter Verwendung einer Datenbank. Mittels der Datenbank können die ermittelten Eigenschaften der Streugutsorte einer konkreten Streugutsorte zugeordnet werden, sodass eine entsprechende Identifikation der Streugutsorte umgesetzt werden kann.

Darüber hinaus ist ein erfindungsgemäßes Verfahren vorteilhaft, bei welchem das Identifizieren der Streugutsorte auf Grundlage von einer oder mehreren der folgenden Eigenschaften der Streugutsorte erfolgt: Korngröße, Schüttdichte, Wurfweite, Abwurfwinkel. Dabei kann in einigen Fällen bereits eine dieser Eigenschaften zur Identifikation der Streugutsorte ausreichen. In anderen Fällen oder zur Erhöhung der Sicherheit bei der Identifikation der Streugutsorte können auch mehrere oder sämtliche dieser Eigenschaften bei der Identifikation der Streugutsorte berücksichtigt werden.

In dem erfindungsgemäßen Verfahren erfolgt das Ermitteln von Einstellparametern für die landwirtschaftliche Streumaschine für den geplanten Streuvorgang auch auf Grundlage zuvor von anderen Benutzern bereitgestellter und auf einer Datenbank oder einem Server gespeicherter Eigenschaften der Streugutsorte. Die Speichereinrichtung oder der Server können die zuvor beschriebene Datenbank umfassen oder einen Zugriff auf diese haben. Sobald konkrete Informationen über die auszubringende Streugutsorte vorliegen, kann geprüft werden, ob auf der Datenbank oder dem Server weitere Eigenschaften zu dieser Streugutsorte vorliegen. Wenn dies der Fall ist, können die weiteren Eigenschaften beim Ermitteln der Einstellparameter für die landwirtschaftliche Streumaschine für den geplanten Streuvorgang berücksichtigt werden, sodass die Ermittlung mit einer erhöhten Präzision erfolgen kann.

Darüber hinaus ist ein erfindungsgemäßes Verfahren vorteilhaft, bei welchem die Ermittlung von Einstellparametern und/oder die Identifikation der Streugutsorte anhand von Abwurfeigenschaften und/oder Flugeigenschaften der Streugutsorte erfolgt. Eine Abwurfeigenschaft ist beispielsweise der Abwurfwinkel. Eine Flugeigenschaft ist beispielsweise die Flugweite. Die Abwurfeigenschaften und/oder Flugeigenschaften können dabei beispielsweise mittels eines oder mehrerer mobiler Verfahren ermittelt worden sein.

In einer alternativen Ausführungsform des erfindungsgemäßen Verfahrens erfolgt das Ermitteln von Einstellparametern für die landwirtschaftliche Streumaschine für den geplanten Streuvorgang unter Verwendung eines künstlichen neuronalen Netzes. Auf diese Weise erfolgt das Ermitteln von Einstellparametern unter Verwendung von künstlicher Intelligenz.

In einer weiteren Ausführungsform des erfindungsgemäßen Verfahrens erfolgt ein Trainieren des künstlichen neuronalen Netzes mittels der im Rahmen des einen oder der mehreren mobilen Verfahren ermittelten Eigenschaften der Streugutsorte. Auf Grundlage eines entsprechenden Trainings des künstlichen neuronalen Netzes kann die Präzision bei der Ermittlung von Einstellparametern weiter gesteigert werden, ohne dass hierzu weitere zeit- und/oder kostenintensive Maßnahmen notwendig sind.

Außerdem ist ein erfindungsgemäßes Verfahren vorteilhaft, bei welchem abrufbare Einstellempfehlungen für die landwirtschaftliche Streumaschine auf Grundlage der im Rahmen des einen oder der mehreren mobilen Verfahren ermittelten Eigenschaften der Streugutsorte durch die Auswerteeinrichtung aktualisiert oder angepasst werden. Insbesondere können die aus der Datenbank abgerufenen Einstellwerte durch Messungen verbessert werden und/oder die Werte der Datenbank können durch die gemessenen Werte aktualisiert werden. Bei der Aktualisierung oder Anpassung der abrufbaren Einstellempfehlungen können die ermittelten Eigenschaften der Streugutsorte gewichtet berücksichtigt werden. Vor der Aktualisierung oder Anpassung der abrufbaren Einstellempfehlungen können die ermittelten Eigenschaften der Streugutsorte auf Plausibilität geprüft werden. Falls die Eigenschaften nicht plausibel sind, können diese auch verworfen und bei der Aktualisierung oder Anpassung der abrufbaren Einstellempfehlungen unberücksichtigt bleiben.

Nachfolgend werden bevorzugte Ausführungsformen der Erfindung unter Bezugnahme auf die beiliegenden Zeichnungen näher erläutert und beschrieben. Dabei zeigen:
- Fig. 1a: einen Schritt eines ersten Ausführungsbeispiels des Verfahrens zum Bestimmen von Einstellparametern für eine landwirtschaftliche Streumaschine;
- Fig. 1b: einen weiteren Schritt des ersten Ausführungsbeispiels des Verfahrens zum Bestimmen von Einstellparametern für eine landwirtschaftliche Streumaschine;
- Fig. 1c: einen weiteren Schritt des ersten Ausführungsbeispiels des Verfahrens zum Bestimmen von Einstellparametern für eine landwirtschaftliche Streumaschine;
- Fig. 1d: einen weiteren Schritt des ersten Ausführungsbeispiels des Verfahrens zum Bestimmen von Einstellparametern für eine landwirtschaftliche Streumaschine;
- Fig. 2a: einen Schritt eines zweiten Ausführungsbeispiels des Verfahrens zum Bestimmen von Einstellparametern für eine landwirtschaftliche Streumaschine;
- Fig. 2b: einen weiteren Schritt des zweiten Ausführungsbeispiels des Verfahrens zum Bestimmen von Einstellparametern für eine landwirtschaftliche Streumaschine;
- Fig. 2c: einen weiteren Schritt des zweiten Ausführungsbeispiels des Verfahrens zum Bestimmen von Einstellparametern für eine landwirtschaftliche Streumaschine;
- Fig. 2d: einen weiteren Schritt des zweiten Ausführungsbeispiels des Verfahrens zum Bestimmen von Einstellparametern für eine landwirtschaftliche Streumaschine;
- Fig. 3a: einen Schritt eines dritten Ausführungsbeispiels des Verfahrens zum Bestimmen von Einstellparametern für eine landwirtschaftliche Streumaschine;
- Fig. 3b: einen weiteren Schritt des dritten Ausführungsbeispiels des Verfahrens zum Bestimmen von Einstellparametern für eine landwirtschaftliche Streumaschine;
- Fig. 3c: einen weiteren Schritt des dritten Ausführungsbeispiels des Verfahrens zum Bestimmen von Einstellparametern für eine landwirtschaftliche Streumaschine; und
- Fig. 3d: einen weiteren Schritt des dritten Ausführungsbeispiels des Verfahrens zum Bestimmen von Einstellparametern für eine landwirtschaftliche Streumaschine.

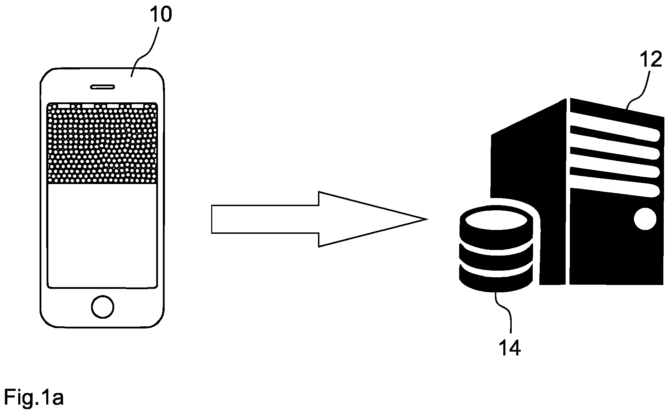

Die Fig. 1a bis 1d zeigen unterschiedliche Schritte eines Verfahren zum Bestimmen von Einstellparametern 18a, 18b für eine landwirtschaftliche Streumaschine 24. Bei dem Verfahren werden zunächst mittels zwei unterschiedlicher mobiler Verfahren Eigenschaften einer Streugutsorte ermittelt.

In der Fig. 1a ist das erste mobile Verfahren dargestellt, mit welchem eine statische Streuguteigenschaft, nämlich das Korngrößenspektrum der Streugutsorte ermittelt wird. Hierzu werden mittels eines mobilen Endgeräts 10, nämlich eines Smartphones, zunächst Bilddaten erzeugt, welche eine Darstellung von mehreren Körnern der Streugutsorte umfassen. Neben dem Streugut ist auf den erzeugten Bilddaten ebenfalls ein Referenzobjekt dargestellt, dessen Größe der benutzten Anwendung auf dem mobilen Endgerät 10 bekannt ist. Das Referenzobjekt kann beispielsweise eine Kante oder ein Kantenbereich des Behältnisses sein, in welchem sich das Streugut während der Bilderzeugung, also dem Abfotografieren, befindet. Die Bilddaten werden von der Anwendung auf dem mobilen Endgerät 10 zur Erfassung des Korngrößenspektrums ausgewertet.

Das ermittelte Korngrößenspektrum wird dann einer Auswerteeinrichtung 12 bereitgestellt, wobei die Auswerteeinrichtung 12 Bestandteil eines zentralen Computersystems, nämlich eines externen Servers ist. Die Auswerteeinrichtung 12 verfügt über eine Datenbank 14, über welche die Streugutsorte auf Basis des erfassten Korngrößenspektrums identifiziert werden kann. Alternativ kann die Identifikation der Streugutsorte auch direkt aus dem Bildmaterial erfolgen. In diesem Fall wird der Auswerteeinrichtung 12 das Bildmaterial zur Auswertung bereitgestellt. Die Identifikation der Streugutsorte durch die Auswerteeinrichtung 12 kann dabei unter Verwendung eines künstlichen neuronalen Netzes erfolgen. Das künstliche neuronale Netz kann anhand der Bilddaten unterschiedlicher Benutzer trainiert werden, damit die Identifikation von Streugutsorten entsprechend verbessert wird. Nach der Identifikation der Streugutsorte können weitere in der Datenbank 14 gespeicherte Eigenschaften der identifizierten Streugutsorte, wie beispielsweise die Schüttdichte, abgerufen und dem mobilen Endgerät 10 bereitgestellt werden.

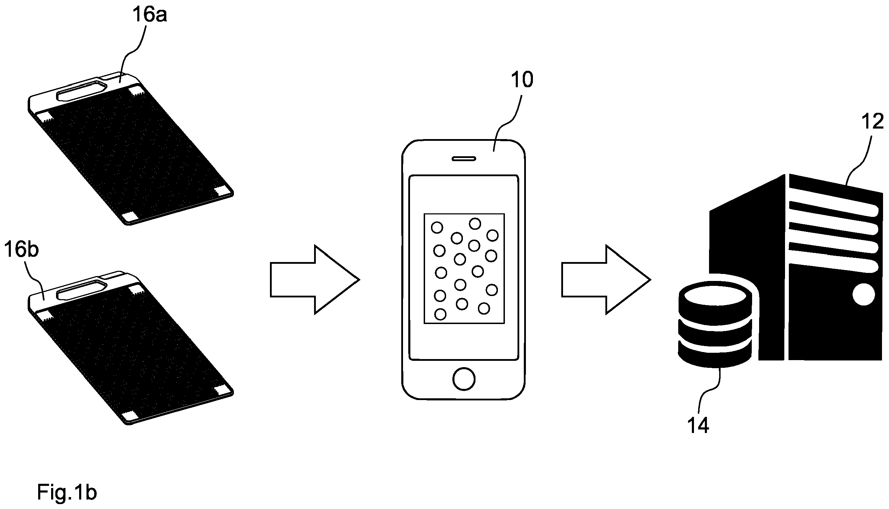

In der Fig. 1b ist das zweite mobile Verfahren dargestellt, mit welchem eine dynamische Streuguteigenschaft, nämlich die Querverteilung der Streugutsorte bei voreingestellten Einstellparametern ermittelt wird. Hierzu werden mehrere Auffangeinrichtungen 16a, 16b auf der landwirtschaftlichen Nutzfläche positioniert bevor eine Prüfausbringung des Streuguts auf der landwirtschaftlichen Nutzfläche ausgeführt wird. Die Auffangeinrichtungen 16a, 16b sind seitlich von einer Fahrgasse mit unterschiedlichen Abständen zu der Fahrgasse in Querrichtung angeordnet. Die Auffangeinrichtungen 16a, 16b sind als Kunststoffmatten ausgebildet und auf ihrer Oberseite mit Noppen besetzt, sodass während der Prüfausbringung abgeworfenes Streugut von den Auffangeinrichtungen 16a, 16b aufgefangen wird. Im Anschluss wird mittels des mobilen Endgeräts 10 Bildmaterial erzeugt, welches die Verteilung des von den Auffangeinrichtungen 16a, 16b während der Prüfausbringung aufgefangenen Streuguts betrifft. Durch ein Auswerten des erzeugten Bildmaterials kann die Querverteilung der Streugutsorte bei den voreingestellten Einstellparametern ermittelt werden. Die ermittelte Querverteilung wird dann ebenfalls der Auswerteeinrichtung 12 bereitgestellt.

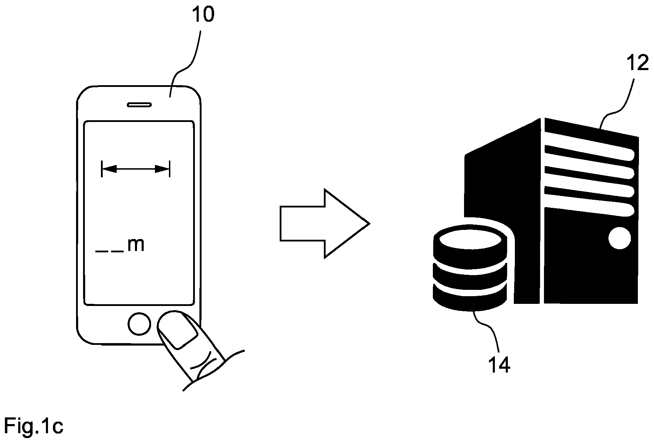

In der Fig. 1c ist dargestellt, dass der Benutzer über eine bereitgestellte Eingabemöglichkeit auf dem mobilen Endgerät 10 die Möglichkeit hat, die beabsichtigte Arbeitsbreite des geplanten Streuvorgangs zu definieren. Die Angabe zu der beabsichtigten Arbeitsbreite wird dann ebenfalls der Auswerteeinrichtung 12 zur Verfügung gestellt.

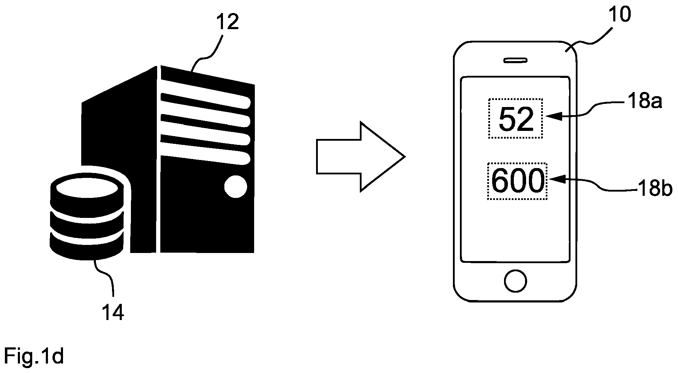

Die Fig. 1d zeigt das Ermitteln der Einstellparameter 18a, 18b für die landwirtschaftliche Streumaschine 24 für den geplanten Streuvorgang durch die Auswerteeinrichtung 12. Die Einstellparameter 18a, 18b betreffen einen einzustellenden Wert für den Aufgabepunkt des Streuguts auf die Verteilscheiben 26a, 26b der landwirtschaftlichen Streumaschine 24 sowie die an den Verteilscheiben 26a, 26b einzustellende Drehzahl.

Das Ermitteln der Einstellparameter 18a, 18b für die landwirtschaftliche Streumaschine 24 für den geplanten Streuvorgang erfolgt auf Grundlage der zuvor über das mobile Endgerät 10 bereitgestellten Informationen, also dem Korngrößenspektrum, der Querverteilung der Streugutsorte bei voreingestellten Einstellparametern und der beabsichtigten Arbeitsbreite. Da auf Grundlage der bereitgestellten Informationen auch ergänzende Eigenschaften der Streugutsorte von der Datenbank 14 abgerufen wurden, erfolgt das Ermitteln der Einstellparameter 18a, 18b für die landwirtschaftliche Streumaschine 24 für den geplanten Streuvorgang auch auf Grundlage der auf der Datenbank 14 hinterlegten Eigenschaften der Streugutsorte.

Das Ermitteln der Einstellparameter 18a, 18b für die landwirtschaftliche Streumaschine 24 durch die Auswerteeinrichtung 12 kann unter Verwendung eines künstlichen neuronalen Netzes erfolgen und somit auf künstliche Intelligenz gestützt werden. Das künstliche neuronale Netz kann außerdem mit von unterschiedlichen Benutzern bereitgestellten Informationen trainiert werden, sodass die Parameterermittlung stetig verbessert wird. Ferner können abrufbare Einstellempfehlungen für die landwirtschaftliche Streumaschine 24 auf Grundlage der im Rahmen der mobilen Verfahren ermittelten Eigenschaften der Streugutsorte durch die Auswerteeinrichtung 12 gepasst bzw. aktualisiert werden.

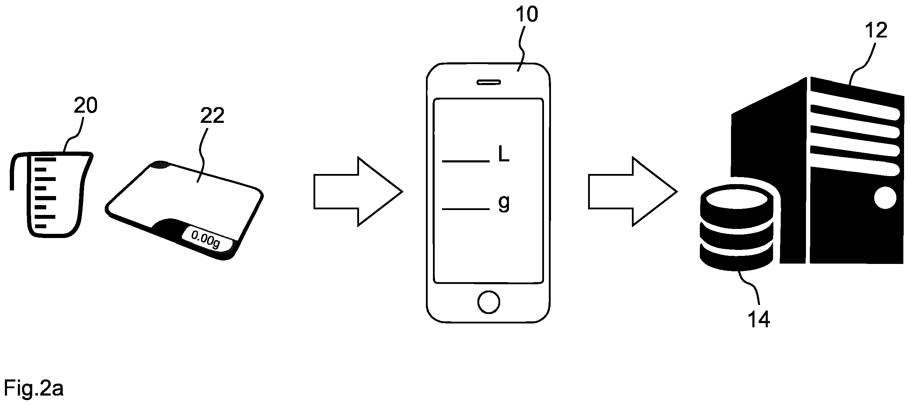

Die Fig. 2a bis 2d zeigen unterschiedliche Schritte eines Verfahren zum Bestimmen von Einstellparametern 18a, 18b für eine landwirtschaftliche Streumaschine 24. Bei dem Verfahren werden mittels zwei unterschiedlicher mobiler Verfahren Eigenschaften einer Streugutsorte ermittelt.

In der Fig. 2a ist das erste mobile Verfahren dargestellt, mit welchem eine statische Streuguteigenschaft, nämlich die Schüttdichte der Streugutsorte ermittelt wird. Hierzu wird mittels eines als Messbecher ausgebildeten Messgefäßes 20 sowie einer als Waage ausgebildeten Gewichtserfassungseinrichtung 22 das Volumen und das Gewicht einer Menge der Streugutsorte bestimmt. Diese Angaben werden einer Anwendung auf einem mobilen Endgerät 10 durch eine manuelle Eingabe eines Benutzers mitgeteilt. Die Anwendung auf dem mobilen Endgerät 10 ermittelt aus diesen Angaben die Schüttdichte der Streugutsorte.

Die ermittelte Schüttdichte wird dann einer Auswerteeinrichtung 12 bereitgestellt, wobei die Auswerteeinrichtung 12 wieder Bestandteil eines zentralen Computersystems, nämlich eines externen Servers ist. Die Auswerteeinrichtung 12 verfügt über eine Datenbank 14, über welche die Streugutsorte auf Basis der erfassten Schüttdichte identifiziert werden kann. Nach der Identifikation der Streugutsorte können weitere in der Datenbank 14 gespeicherte Eigenschaften der identifizierten Streugutsorte, wie beispielsweise das Korngrößenspektrum, abgerufen und dem mobilen Endgerät 10 bereitgestellt werden. Falls auf Grundlage der Schüttdichte noch keine eindeutige Identifikation der Streugutsorte erfolgen kann, können auch andere Eigenschaften der Streugutsorte berücksichtigt werden, welche beispielsweise über ein oder mehrere andere mobile Verfahren ermittelt werden.

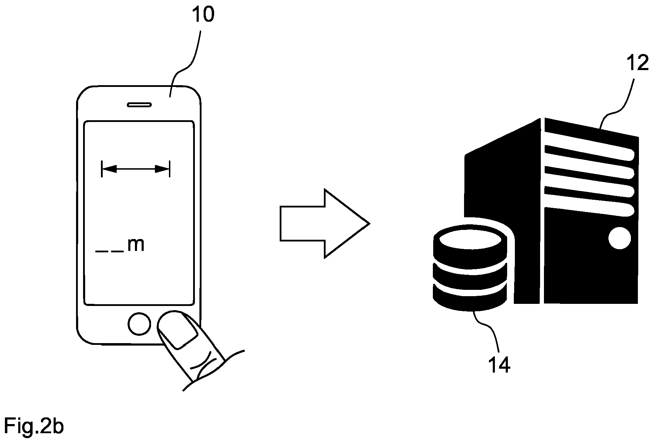

In der Fig. 2b ist dargestellt, dass der Benutzer über eine bereitgestellte Eingabemöglichkeit auf dem mobilen Endgerät 10 die Möglichkeit hat, die beabsichtigte Arbeitsbreite des geplanten Streuvorgangs zu definieren. Die Angabe zu der beabsichtigten Arbeitsbreite wird dann ebenfalls der Auswerteeinrichtung 12 zur Verfügung gestellt.

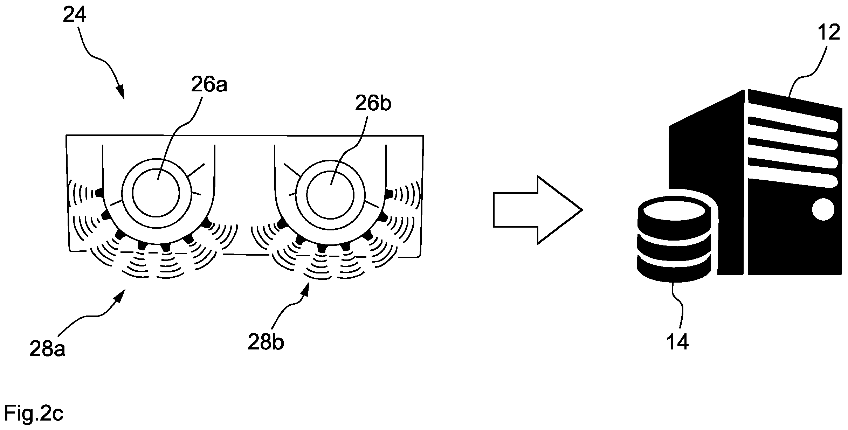

In der Fig. 2c ist das zweite mobile Verfahren dargestellt, mit welchem eine dynamische Streuguteigenschaft, nämlich ein tatsächlicher Abwurfwinkel der Streugutsorte bei voreingestellten Einstellparametern ermittelt wird. Hierzu wird eine Abwurfwinkelmesseinrichtung der landwirtschaftlichen Streumaschine 24 verwendet. Die Abwurfwinkelmesseinrichtung umfasst zwei Gruppen von Sensoren 28a, 28b, welche jeweils einen von einer Verteilscheibe 26a, 26b erzeugten Streufächer überwachen. Die Sensoren 28a, 28b sind dabei als Radarsensoren ausgebildet. Durch ein Auswerten der Sensorsignale kann der tatsächliche Abwurfwinkel der Streugutsorte bei den voreingestellten Einstellparametern ermittelt werden. Der ermittelte Abwurfwinkel wird dann ebenfalls der Auswerteeinrichtung 12 bereitgestellt.

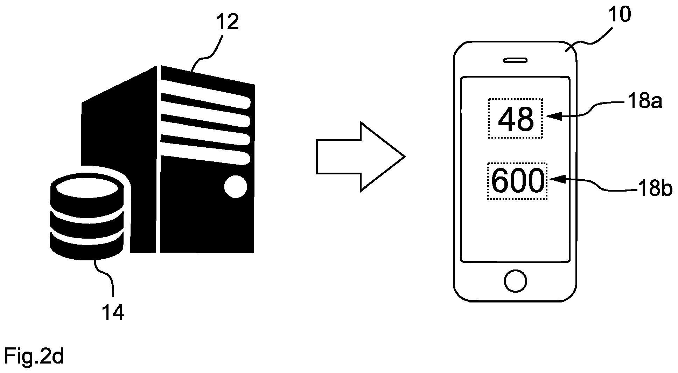

Die Fig. 2d zeigt das Ermitteln der Einstellparameter 18a, 18b für die landwirtschaftliche Streumaschine 24 für den geplanten Streuvorgang durch die Auswerteeinrichtung 12. Die Einstellparameter 18a, 18b betreffen erneut einen einzustellenden Wert für den Aufgabepunkt des Streuguts auf die Verteilscheiben 26a, 26b der landwirtschaftlichen Streumaschine 24 sowie die an den Verteilscheiben 26a, 26b einzustellende Drehzahl.

Das Ermitteln der Einstellparameter 18a, 18b für die landwirtschaftliche Streumaschine 24 für den geplanten Streuvorgang erfolgt auf Grundlage der zuvor über das mobile Endgerät 10 bereitgestellten Informationen, also der Schüttdichte, einem Abwurfwinkel der Streugutsorte bei voreingestellten Einstellparametern und der beabsichtigten Arbeitsbreite, sowie auf Grundlage von auf der Datenbank 14 hinterlegten Eigenschaften der Streugutsorte.

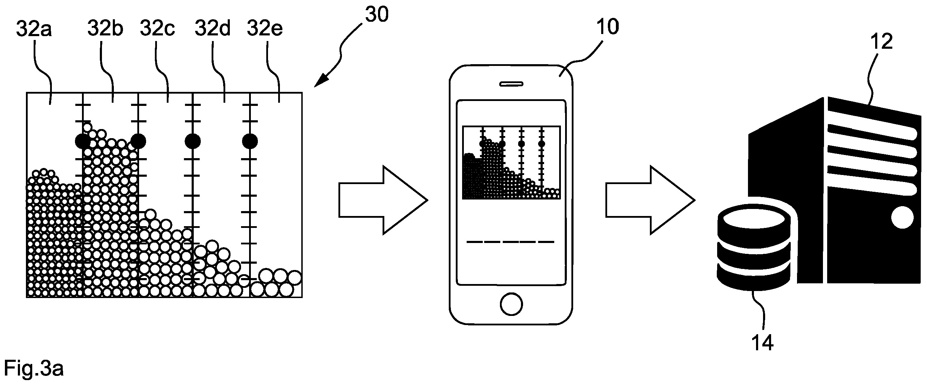

Die Fig. 3a bis 3d zeigen unterschiedliche Schritte eines Verfahrens zum Bestimmen von Einstellparametern 18a, 18b für eine landwirtschaftliche Streumaschine 24. Bei dem Verfahren werden mittels zwei unterschiedlicher mobiler Verfahren Eigenschaften einer Streugutsorte ermittelt.

In der Fig. 3a ist das erste mobile Verfahren dargestellt, mit welchem eine statische Streuguteigenschaft, nämlich Anteile unterschiedlicher Korngrößen der Streugutsorte ermittelt wird. Hierzu wird ein Schüttelbehältnisses 30 eingesetzt, in welches eine Menge der Streugutsorte eingefüllt wird. Das Schüttelbehältnis 30 umfasst unterschiedliche Kammern 32a-32e, in welchen sich beim Schütteln des Schüttelbehältnisses 30 jeweils Körner eines bestimmen Größenspektrums ansammeln. Die Angaben zu den jeweiligen Kammern 32a-32e befindlichen Mengen an Streugut werden einer Anwendung auf einem mobilen Endgerät 10 durch eine manuelle Eingabe des Benutzers mitgeteilt.

Die ermittelten Anteile unterschiedlicher Korngrößen der Streugutsorte werden dann einer Auswerteeinrichtung 12 bereitgestellt, wobei die Auswerteeinrichtung 12 wieder Bestandteil eines zentralen Computersystems, nämlich eines externen Servers ist. Die Auswerteeinrichtung 12 verfügt über eine Datenbank 14, über welche die Streugutsorte auf Basis der erfassten Anteile unterschiedlicher Korngrößen der Streugutsorte identifiziert werden kann. Nach der Identifikation der Streugutsorte können weitere in der Datenbank 14 gespeicherte Eigenschaften der identifizierten Streugutsorte, wie beispielsweise die Schüttdichte oder das Korngrößenspektrum abgerufen und dem mobilen Endgerät 10 bereitgestellt werden. Falls auf Grundlage der ermittelten Anteile unterschiedlicher Korngrößen der Streugutsorte noch keine eindeutige Identifikation der Streugutsorte erfolgen kann, können auch andere Eigenschaften der Streugutsorte berücksichtigt werden, welche beispielsweise über ein oder mehrere andere mobile Verfahren ermittelt werden.

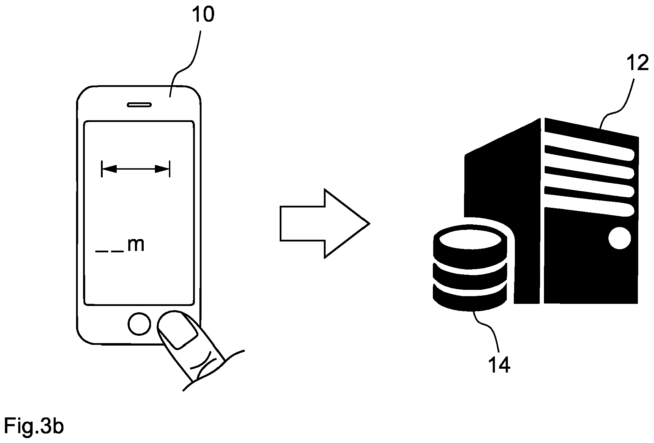

In der Fig. 3b ist dargestellt, dass der Benutzer über eine bereitgestellte Eingabemöglichkeit auf dem mobilen Endgerät 10 die Möglichkeit hat, die beabsichtigte Arbeitsbreite des geplanten Streuvorgangs zu definieren. Die Angabe zu der beabsichtigten Arbeitsbreite wird dann ebenfalls der Auswerteeinrichtung 12 zur Verfügung gestellt.

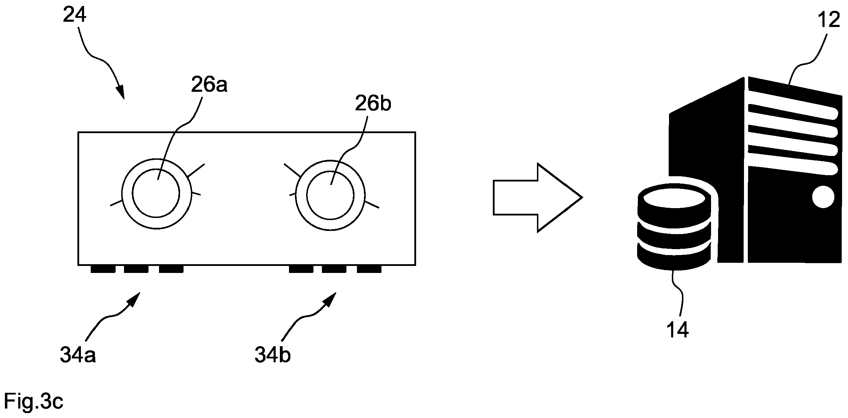

In der Fig. 3c ist das zweite mobile Verfahren dargestellt, mit welchem eine dynamische Streuguteigenschaft, nämlich eine tatsächliche Wurfweite der Streugutsorte bei voreingestellten Einstellparametern ermittelt wird. Hierzu wird eine Wurfweitenmesseinrichtung der landwirtschaftlichen Streumaschine 24 verwendet. Die Wurfweitenmesseinrichtung umfasst zwei Gruppen von optischen Sensoren 34a, 34, welche jeweils einen von einer Verteilscheibe 26a, 26b erzeugten Streufächer überwachen. Durch ein Auswerten der Sensorsignale kann die tatsächliche Wurfweite der Streugutsorte bei den voreingestellten Einstellparametern ermittelt werden. Die ermittelte Wurfweite wird dann ebenfalls der Auswerteeinrichtung 12 bereitgestellt.

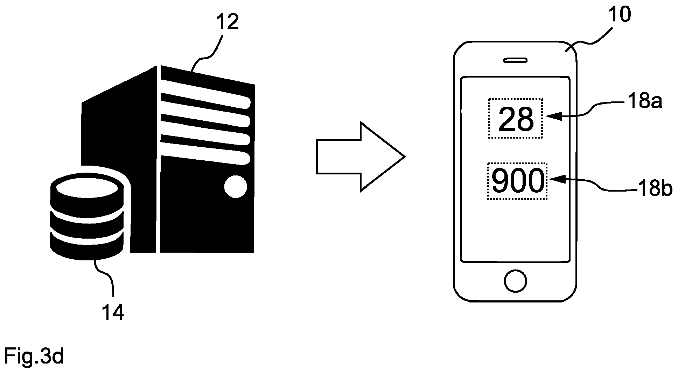

Die Fig. 3d zeigt das Ermitteln der Einstellparameter 18a, 18b für die landwirtschaftliche Streumaschine 24 für den geplanten Streuvorgang durch die Auswerteeinrichtung 12. Die Einstellparameter 18a, 18b betreffen erneut einen einzustellenden Wert für den Aufgabepunkt des Streuguts auf die Verteilscheiben 26a, 26b der landwirtschaftlichen Streumaschine 24 sowie die an den Verteilscheiben 26a, 26b einzustellende Drehzahl.

Das Ermitteln der Einstellparameter 18a, 18b für die landwirtschaftliche Streumaschine 24 für den geplanten Streuvorgang erfolgt auf Grundlage der zuvor über das mobile Endgerät 10 bereitgestellten Informationen, also der Anteile unterschiedlicher Korngrößen der Streugutsorte, der Wurfweite der Streugutsorte bei voreingestellten Einstellparametern und der beabsichtigten Arbeitsbreite, sowie auf Grundlage von auf der Datenbank 14 hinterlegten Eigenschaften der Streugutsorte.

### Bezugszeichen

- 10: mobiles Endgerät
- 12: Auswerteeinrichtung
- 14: Datenbank
- 16a, 16b: Auffangeinrichtungen
- 18a, 18b: Einstellparameter
- 20: Messgefäß
- 22: Gewichtserfassungseinrichtung
- 24: Streumaschine
- 26a, 26b: Verteilscheiben
- 28a, 28b: Sensoren
- 30: Schüttelbehältnis
- 32a-32e: Kammern
- 34a, 34b: Sensoren

## Patentansprüche

1. Verfahren zum Bestimmen von Einstellparametern (18a, 18b) für eine landwirtschaftliche Streumaschine (24), mit den Schritten:
- Ermitteln von Eigenschaften einer Streugutsorte mittels eines oder mehrerer mobiler Verfahren;
- Bereitstellen der ermittelten Eigenschaften der Streugutsorte und einer Angabe zu einer beabsichtigten Arbeitsbreite bei einem geplanten Streuvorgang für eine Auswerteeinrichtung (12);
- Ermitteln von Einstellparametern (18a, 18b) für eine landwirtschaftliche Streumaschine (24) für den geplanten Streuvorgang durch die Auswerteeinrichtung (12) auf Grundlage der ermittelten Eigenschaften der Streugutsorte und der Angabe zu der beabsichtigten Arbeitsbreite bei dem geplanten Streuvorgang
**dadurch gekennzeichnet, dass** das Ermitteln von Einstellparametern (18a, 18b) für die landwirtschaftliche Streumaschine (24) für den geplanten Streuvorgang auch auf Grundlage zuvor von anderen Benutzern bereitgestellter und auf einer Datenbank (14) oder einem Server gespeicherter Eigenschaften der Streugutsorte erfolgt.

2. Verfahren nach Anspruch 1,
**dadurch gekennzeichnet, dass** die mittels des einen oder der mehreren mobilen Verfahren ermittelten Eigenschaften der Streugutsorte statische Streuguteigenschaften sind und vorzugsweise die Korngröße und/oder das Korngrößenspektrum und/oder die Schüttdichte der Streugutsorte betreffen.

3. Verfahren nach Anspruch 1 oder 2,
**dadurch gekennzeichnet, dass** die mittels des einen oder der mehreren mobilen Verfahren ermittelten Eigenschaften der Streugutsorte dynamische Streuguteigenschaften sind und vorzugsweise eine Wurfweite und/oder einen Abwurfwinkel der Streugutsorte betreffen.

4. Verfahren nach einem der vorstehenden Ansprüche,
**dadurch gekennzeichnet, dass** ein mobiles Verfahren zum Ermitteln der Eigenschaften der Streugutsorte zumindest einen der folgenden Schritte umfasst:
- Erzeugen von Bilddaten, welche eine Darstellung von einem oder mehreren Körnern der Streugutsorte umfassen;
- Auswerten der Bilddaten zum Ermitteln einer Korngröße oder der Anteile unterschiedlicher Korngrößen der dargestellten Streugutsorte.

5. Verfahren nach einem der vorstehenden Ansprüche,
**dadurch gekennzeichnet, dass** ein mobiles Verfahren zum Ermitteln der Eigenschaften der Streugutsorte zumindest einen der folgenden Schritte umfasst:
- Erzeugen von Bilddaten, welche eine Darstellung von einem oder mehreren Körnern der Streugutsorte umfassen;
- Auswerten der Bilddaten zur Identifikation der dargestellten Streugutsorte;
- Abruf der Eigenschaften der identifizierten Streugutsorte von einer Datenbank (14).

6. Verfahren nach Anspruch 5,
**dadurch gekennzeichnet, dass** die Identifikation der Streugutsorte auf Grundlage der Auswertung der Bilddaten unter Verwendung eines künstlichen neuronalen Netzes erfolgt.

7. Verfahren nach einem der vorstehenden Ansprüche,
**dadurch gekennzeichnet, dass** ein mobiles Verfahren zum Ermitteln der Eigenschaften der Streugutsorte zumindest einen der folgenden Schritte umfasst:
- Ermitteln der Schüttdichte der Streugutsorte unter Verwendung eines Messgefäßes (20) und/oder einer Gewichtserfassungseinrichtung (22);
- Ermitteln der Anteile unterschiedlicher Korngrößen der Streugutsorte mittels eines Schüttelbehältnisses (30).

8. Verfahren nach einem der vorstehenden Ansprüche,
**dadurch gekennzeichnet, dass** ein mobiles Verfahren zum Ermitteln der Eigenschaften der Streugutsorte zumindest einen der folgenden Schritte umfasst:
- Erfassen einer tatsächlichen Wurfweite der Streugutsorte mittels einer Wurfweitenmesseinrichtung der landwirtschaftlichen Streumaschine (24);
- Erfassen eines tatsächlichen Abwurfwinkels der Streugutsorte mittels einer Abwurfwinkelmesseinrichtung der landwirtschaftlichen Streumaschine (24).

9. Verfahren nach einem der vorstehenden Ansprüche,
**gekennzeichnet durch** zumindest einen der folgenden Schritte:
- Bereitstellen einer Eingabemöglichkeit für einen Benutzer, über welche die im Rahmen des geplanten Streuvorgangs auszubringende Streugutsorte definierbar ist;
- Identifizieren der Streugutsorte auf Grundlage der im Rahmen des einen oder der mehreren mobilen Verfahren ermittelten Eigenschaften der Streugutsorte.

10. Verfahren nach Anspruch 9,
**dadurch gekennzeichnet, dass** das Identifizieren der Streugutsorte auf Grundlage von einer oder mehreren der folgenden Eigenschaften der Streugutsorte erfolgt: Korngröße, Schüttdichte, Wurfweite, Abwurfwinkel.

11. Verfahren nach einem der vorstehenden Ansprüche,
**dadurch gekennzeichnet, dass** die Ermittlung von Einstellparametern (18a, 18b) und/oder die Identifikation der Streugutsorte anhand von Abwurfeigenschaften und/oder Flugeigenschaften der Streugutsorte erfolgt.

12. Verfahren nach einem der vorstehenden Ansprüche,
**dadurch gekennzeichnet, dass** das Ermitteln von Einstellparametern (18a, 18b) für die landwirtschaftliche Streumaschine (24) für den geplanten Streuvorgang unter Verwendung eines künstlichen neuronalen Netzes erfolgt.

13. Verfahren nach einem der Ansprüche 6 bis 12,
**gekennzeichnet durch** den Schritt:
- Trainieren des künstlichen neuronalen Netzes mittels der im Rahmen des einen oder der mehreren mobilen Verfahren ermittelten Eigenschaften der Streugutsorte.

14. Verfahren nach einem der vorstehenden Ansprüche,
**gekennzeichnet durch** den Schritt:
- Aktualisieren oder Anpassen abrufbarer Einstellempfehlungen für die landwirtschaftliche Streumaschine (24) auf Grundlage der im Rahmen des einen oder der mehreren mobilen Verfahren ermittelten Eigenschaften der Streugutsorte durch die Auswerteeinrichtung (12).

## Claims

1. Method for determining setting parameters (18a, 18b) for an agricultural spreader (24), comprising the steps of:
- determining properties of a spreadable material type by means of one or more mobile methods;
- providing the determined properties of the spreadable material type and an indication of an intended working width in a planned spreading process for an evaluation means (12);
- determining setting parameters (18a, 18b) for an agricultural spreader (24) for the planned spreading process by the evaluation means (12) on the basis of the determined properties of the spreadable material type and the indication of the intended working width in the planned spreading process
**characterized in that** setting parameters (18a, 18b) for the agricultural spreader (24) for the planned spreading process are also determined on the basis of properties of the spreadable material type previously provided by other users and stored on a database (14) or a server.

2. Method according to claim 1,
**characterized in that** the properties of the spreadable material type determined by means of the one or more mobile methods are static spreadable material properties and preferably relate to the grain size and/or the grain size spectrum and/or the bulk density of the spreadable material type.

3. Method according to either claim 1 or claim 2,
**characterized in that** the properties of the spreadable material type determined by means of the one or more mobile methods are dynamic spreadable material properties and preferably relate to a throwing distance and/or a discharge angle of the spreadable material type.

4. Method according to any of the preceding claims,
**characterized in that** a mobile method for determining the properties of the spreadable material type comprises at least one of the following steps:
- generating image data comprising a representation of one or more grains of the spreadable material type;
- evaluating the image data for determining a grain size or the proportions of different grain sizes of the spreadable material type shown.

5. Method according to any of the preceding claims,
**characterized in that** a mobile method for determining the properties of the spreadable material type comprises at least one of the following steps:
- generating image data comprising a representation of one or more grains of the spreadable material type;
- evaluating the image data for identifying the spreadable material type shown;
- retrieving the properties of the identified spreadable material type from a database (14).

6. Method according to claim 5,
**characterized in that** the spreadable material type is identified on the basis of the evaluation of the image data using an artificial neural network.

7. Method according to any of the preceding claims,
**characterized in that** a mobile method for determining the properties of the spreadable material type comprises at least one of the following steps:
- measuring the bulk density of the spreadable material type using a measuring vessel (20) and/or a weight detecting means (22);
- determining the proportions of different grain sizes of the spreadable material type by means of a shaking container (30).

8. Method according to any of the preceding claims,
**characterized in that** a mobile method for determining the properties of the spreadable material type comprises at least one of the following steps:
- detecting an actual throwing distance of the spreadable material type by means of a throwing distance measuring means of the agricultural spreader (24);
- detecting an actual discharge angle of the spreadable material type by means of a discharge angle measuring means of the agricultural spreader (24).

9. Method according to any of the preceding claims,
**characterized by** at least one of the following steps:
- providing an input option for a user, by means of which the spreadable material type to be applied as part of the planned spreading process can be defined;
- identifying the spreadable material type on the basis of the properties of the spreadable material type determined in the context of the one or more mobile methods.

10. Method according to claim 9,
**characterized in that** the spreadable material type is identified on the basis of one or more of the following properties of the spreadable material type: grain size, bulk density, throwing distance, discharge angle.

11. Method according to any of the preceding claims,
**characterized in that** setting parameters (18a, 18b) are determined and/or the spreadable material type is identified on the basis of discharge properties and/or flight properties of the spreadable material type.

12. Method according to any of the preceding claims,
**characterized in that** setting parameters (18a, 18b) for the agricultural spreader (24) for the planned spreading process are determined using an artificial neural network.

13. Method according to any of claims 6 to 12,
**characterized by** the step of:
- training the artificial neural network by means of the properties of the spreadable material type determined in the context of the one or more mobile methods.

14. Method according to any of the preceding claims,
**characterized by** the step of:
- updating or adapting retrievable setting recommendations for the agricultural spreader (24) on the basis of the properties of the spreadable material type determined in the context of the one or more mobile methods by the evaluation means (12).

## Revendications

1. Procédé destiné à la détermination de paramètres de réglage (18a, 18b) pour une machine d'épandage agricole (24), comportant les étapes de :
- détermination de propriétés d'un type de produit d'épandage à l'aide d'un ou de plusieurs procédés mobiles ;
- fourniture des propriétés déterminées du type de produit d'épandage et d'une indication concernant une largeur de travail envisagée lors d'un processus d'épandage planifié pour un dispositif d'analyse (12) ;
- détermination de paramètres de réglage (18a, 18b) pour une machine d'épandage agricole (24) pour le processus d'épandage planifié par le dispositif d'analyse (12) sur la base des propriétés déterminées du type de produit d'épandage et de l'indication concernant la largeur de travail envisagée lors du processus d'épandage planifié,
**caractérisé en ce que** la détermination de paramètres de réglage (18a, 18b) pour la machine d'épandage agricole (24) pour le processus d'épandage planifié est également effectuée sur la base de propriétés du type de produit d'épandage fournies au préalable par d'autres utilisateurs et enregistrées dans une base de données (14) ou sur un serveur.

2. Procédé selon la revendication 1,
**caractérisé en ce que** les propriétés du type de produit d'épandage déterminées à l'aide de l'un ou des plusieurs procédés mobiles sont des propriétés statiques du produit d'épandage et concernent de préférence la grosseur de grain et/ou le spectre granulométrique et/ou la densité apparente du type de produit d'épandage.

3. Procédé selon la revendication 1 ou 2,
**caractérisé en ce que** les propriétés du type de produit d'épandage déterminées à l'aide de l'un ou des plusieurs procédés mobiles sont des propriétés dynamiques du produit d'épandage et concernent de préférence une distance de projection et/ou un angle d'éjection du type de produit d'épandage.

4. Procédé selon l'une des revendications précédentes,
**caractérisé en ce qu'**un procédé mobile destiné à déterminer les propriétés du type de produit d'épandage comprend au moins l'une des étapes suivantes :
- génération de données d'image qui comprennent une représentation d'un ou de plusieurs grains du type de produit d'épandage ;
- analyse des données d'image pour la détermination d'une grosseur de grain ou les proportions de différentes grosseurs de grain du type de produit d'épandage représenté.

5. Procédé selon l'une des revendications précédentes,
**caractérisé en ce qu'**un procédé mobile destiné à déterminer les propriétés du type de produit d'épandage comprend au moins l'une des étapes suivantes :
- génération de données d'image qui comprennent une représentation d'un ou de plusieurs grains du type de produit d'épandage ;
- analyse des données d'image pour l'identification du type de produit d'épandage représenté ;
- extraction des propriétés du type de produit d'épandage identifié à partir d'une base de données (14).

6. Procédé selon la revendication 5,
**caractérisé en ce que** l'identification du type de produit d'épandage est effectuée sur la base de l'analyse des données d'image à l'aide d'un réseau neuronal artificiel.

7. Procédé selon l'une des revendications précédentes,
**caractérisé en ce qu'**un procédé mobile destiné à déterminer les propriétés du type de produit d'épandage comprend au moins l'une des étapes suivantes :
- détermination de la densité apparente du type de produit d'épandage à l'aide d'un récipient de mesure (20) et/ou d'un dispositif de détection du poids (22) ;
- détermination des proportions de différentes grosseurs de grain du type de produit d'épandage à l'aide d'un récipient à secousses (30).

8. Procédé selon l'une des revendications précédentes,
**caractérisé en ce qu'**un procédé mobile destiné à déterminer les propriétés du type de produit d'épandage comprend au moins l'une des étapes suivantes :
- détection d'une distance de projection effective du type de produit d'épandage à l'aide d'un dispositif de mesure de la distance de projection de la machine d'épandage agricole (24) ;
- détection d'un angle d'éjection effectif du type de produit d'épandage à l'aide d'un dispositif de mesure de l'angle d'éjection de la machine d'épandage agricole (24).

9. Procédé selon l'une des revendications précédentes,
**caractérisé par** au moins l'une des étapes suivantes :
- fourniture d'une possibilité d'entrée pour un utilisateur, par l'intermédiaire de laquelle le type de produit d'épandage à épandre dans le cadre du processus d'épandage planifié peut être défini ;
- identification du type de produit d'épandage sur la base des propriétés du type de produit d'épandage déterminées dans le cadre de l'un ou des plusieurs procédés mobiles.

10. Procédé selon la revendication 9,
**caractérisé en ce que** l'identification du type de produit d'épandage est effectuée sur la base d'une ou de plusieurs des propriétés suivantes du type de produit d'épandage : grosseur de grain, densité apparente, distance de projection, angle d'éjection.

11. Procédé selon l'une des revendications précédentes,
**caractérisé en ce que** la détermination de paramètres de réglage (18a, 18b) et/ou l'identification du type de produit d'épandage est/sont effectuée(s) à l'aide de propriétés d'éjection et/ou de propriétés en vol du type de produit d'épandage.

12. Procédé selon l'une des revendications précédentes,
**caractérisé en ce que** la détermination de paramètres de réglage (18a, 18b) pour la machine d'épandage agricole (24) pour le processus d'épandage planifié est effectuée à l'aide d'un réseau neuronal artificiel.

13. Procédé selon l'une des revendications 6 à 12,
**caractérisé par** l'étape :
- d'apprentissage du réseau neuronal artificiel à l'aide des propriétés du type de produit d'épandage déterminées dans le cadre de l'un ou des plusieurs procédés mobiles.

14. Procédé selon l'une des revendications précédentes,
**caractérisé par** l'étape :
- d'actualisation ou d'adaptation de recommandations de réglage pouvant être extraites pour la machine d'épandage agricole (24) sur la base des propriétés du type de produit d'épandage déterminées dans le cadre de l'un ou des plusieurs procédés mobiles par le dispositif d'analyse (12).
